# EUROPEAN PATENT APPLICATION

(11) **EP 2 228 880 A1**
(43) Date of publication of application: **15.09.2010**
(21) Application number: 10155937.5
(22) Date of filing: 09.03.2010
(51) Int. Cl.: H02J 3/00, H02J 9/00

(54) **An improved electrical power supply system for tunnels, particularly for road tunnels**

(30) Priority: 10.03.2009 IT TO20090174
(71) Applicant: Universita' Degli Studi Di Genova, 16126 Genova (IT)
(72) Inventor: Delfino, Federico, I-17100 Savona (IT); Procopio, Renato, I-17100 Savonâ (IT); Aresi, Roberto, I-16035 Rapallo (Genova) (IT)
(74) Representative: Deambrogi, Edgardo

(57) **Abstract**

A system for the power supply in tunnels is described, in particular road tunnels (T1, T2), comprising at least one station (20) for distributing electrical energy over at least one supply line (L) of electrical loads (40a, 40b, ..., 40n) installed in the tunnel (T), adapted to receive and convert electrical power supplied by a primary power source to supply the loads (40a, 40b, ..., 40n) in a normal operating condition.

A local power generating plant (30) associated with the distribution station (20) is stably connected to the supply line (L) and is adapted to provide electrical energy to the loads in a continuous manner as a primary power supply (G). In normal operating conditions the public distribution grid (GRID) is connected to the supply line (L) only in case of a power requirement at the loads which is greater than the amount delivered by the power generating plant (30). In case of a power requirement at the loads which is lower than the amount delivered by the power generating plant (30), the latter is arranged to selectively supply at least one electrical power distribution grid (GRID; PRIV) external to the tunnel (T1, T2), amongst which at least the public distribution grid.

## Description

The present invention concerns the power supply in tunnels, and in particular a system for the emergency power supply in road tunnels.

Specifically, the invention refers to a system for the power supply in tunnels according to the preamble of claim 1.

Tunnels constitute particular sections of a road or highway system. They have high construction, maintenance and management costs, and must meet high safety standards. Tunnel equipment must allow the users, in free driving conditions, to drive through the portion of road in the tunnel with as much safety as the outside road system and, in the case of traffic disruptions it must - as much as possible - eliminate or reduce to a minimum danger to people.

In order to satisfy these requirements, the overall section of a tunnel comprises a free section, i.e. without fixed obstacles, vehicles can pass through, the area of which is designed according to the type of traffic foreseen in the tunnel, and a surrounding space intended for service apparatuses, including lighting bodies, ventilation systems, signalling devices and all safety apparatuses, for example for video-surveillance, emergency rescue, fire prevention, detection and extinguishing.

A tunnel is configured like an industrial process, since it forms a single integrated system grouping inside it a plurality of technological subsystems that make it possible to acquire information on the relevant variables and to act upon the state of the overall system.

In particular, its general architecture is preferably modular and standardized, and the technological subsystems communicate with one another through a programmable controller managed by a supervising system, so as to make it possible to actuate a centralised management of the tunnel, specifically the supervision and the control of all electrical and electro-mechanical systems in normal and emergency conditions, from a single control room.

The subsystems forming the technological infrastructure of a tunnel are, typically, the following:
- control subsystem;
- supervision subsystem;
- closed circuit video surveillance subsystem;
- communication subsystem;
- subsystem for the distribution of electrical energy, including the emergency power supply;
- ventilation subsystem and subsystem for detecting the environmental conditions inside;
- subsystem for detecting the environmental conditions outside;
- fire detection subsystem;
- fire prevention subsystem;
- lighting subsystem;
- signalling subsystem and traffic light subsystem;
- emergency rescue subsystem;
- mobile radio coverage subsystem;
- traffic control subsystem;
- by-pass service subsystem.

Of course, not all tunnels are equipped with all the listed subsystems. It is necessary for there to be a plant for the distribution of electrical energy when, inside the tunnel, there are electrical loads and, in general, the first loads that are installed in a tunnel, when it exceeds a minimum length, are the lighting bodies. It can thus be stated that the minimum length of a tunnel for which a power distribution system is provided coincides with that for which a lighting system must be installed.

The electrical energy for supplying the loads installed in a tunnel is generally taken (purchased) from the local public distribution grid, and is conveyed along one or more low- or medium-voltage supply lines (according to the type of loads) from one or more distribution stations arranged at the ends of the tunnel or along it and directly connected to the public grid, with a system that has no provisions for redundancy of the power supply coming from the power distributing company.

Some electrical or electro-mechanical subsystems must necessarily provide continuous operation, therefore also in emergency conditions, in which the primary supply, coming from the public grid, is cut off. For this reason, overall, a power supplying and distributing system for tunnels conventionally comprises, as well as the mentioned electrical apparatuses for transforming and distributing power taken from the public grid, also an emergency generator (or power generating set) as well as at least one uninterruptible power supply (UPS). The static uninterruptible power supplies are adapted to allow the operation of the subsystems for the permanent lighting, tunnel control and management, communication, emergency rescue, outside environmental conditions detection, fire detection, closed circuit video surveillance, traffic light signalling, radio-mobile coverage, traffic control and for by-pass service during the start-up time of the emergency generator. The latter must ensure that the loads supported at the uninterruptible power supplies can operate, maintaining the supply of the aforementioned loads for a time which is generally not less than 24 hours.

A method and a device for supplying power in emergency conditions in a tunnel are described, for example, in EP 1 467 465 A2

A gas oil generating set is typically installed near to power distribution stations.

Current safety standards establish that in the case there is a black-out of the primary supply system, an emergency power generation system is actuated, which is thus operating only occasionally, remaining inactive most of the time.

This approach determines, however, a series of technical and economic drawbacks. The non instantaneous start-up time of the emergency power supplying system makes it necessary to need auxiliary apparatuses, like the uninterruptible power supplies, for maintaining the power supply in the switching transient between the two power sources. Moreover, the emergency power supplying system must periodically undergo an operation testing.

Economically, the situation is hardly advantageous, in terms of costs for frequent programmed maintenance of apparatuses intended to not operate most of the time, and sunk costs, respectively.

The purpose of the present invention is to provide a satisfactory solution for the problems previously outlined, avoiding the drawbacks of the prior art.

In particular, the purpose of the invention is to provide an improved system for the power supply in a tunnel, which offers an increased operative reliability in all normal and emergency conditions, as well as having low operating costs.

According to the present invention such a purpose is achieved thanks to a system with the characteristics shown in claim 1.

Particular embodiments are the subject of the dependent claims, the content of which should be considered an integral or integrating part of the present description.

In brief, the present invention is based upon a new power generating system concept, and it relies on the use of a generating set, and in a preferred embodiment, of a cogeneration system comprising a thermal engine and a heat recovery system, constantly operating as a primary power supply and of a power distribution system operatively connected to two power sources (the generating set and the public power supply grid) adapted to supply power to electrical loads of the tunnel and to supply excess power to one or more distribution networks external to the tunnel, amongst which the public grid itself and one or more private infrastructures for distributing power in a geographical area near to the tunnel.

The system is also able to measure the quantity of power produced and conveyed to loads external to the tunnel, and to charge such a quantity, replacing or working together with a public power supply company for selling power to third parties.

Advantageously, the power supply system for a tunnel subject of the invention and based upon a generating set operating uninterruptedly, makes it possible to produce and sell electricity, and possibly heat, during the normal operation of the public power supply grid and, in the case of power cuts in the grid, the generating set acts as an emergency generator according to the prior art, avoiding the drawback of sunk costs for providing and operating a system just for emergencies according to the prior art, for the benefit of the tunnel manager.

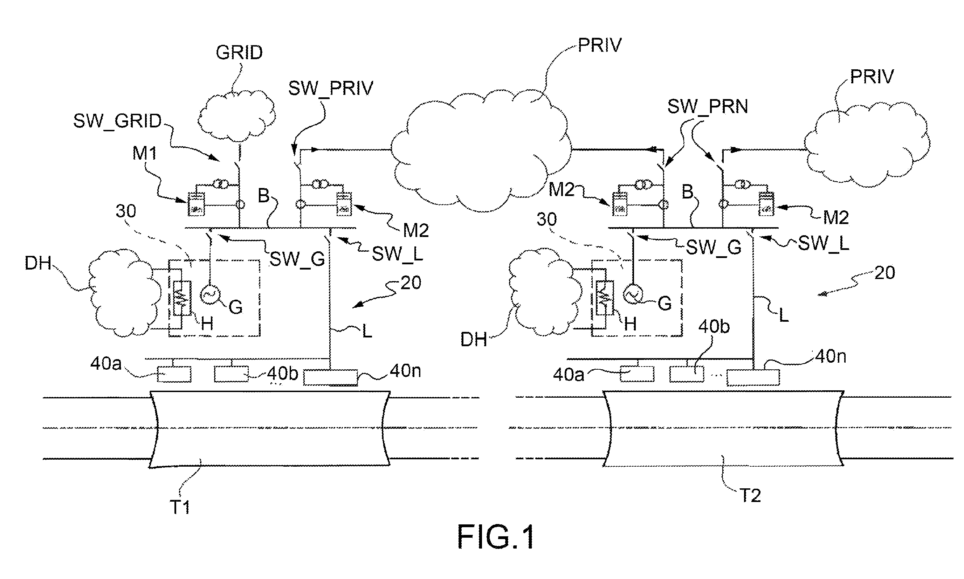

Further characteristics and advantages of the invention shall be outlined in more detail in the following detailed description of one embodiment thereof, given as an example and not for limiting purposes, with reference to the attached figure, which shows a circuit diagram of the power supplying system according to the invention.

In the figure, two bi-directional road tunnels with a single passage on the same section of highway are schematically indicated with T1 and T2.

To each tunnel T1, T2 a station for distributing electrical energy 20 is associated, that - in the prior art - is arranged for dispensing electrical energy coming from the public grid on a supply line L of loads installed in the tunnel. The distribution station 20 also comprises a cogeneration unit, generally identified with reference numeral 30, for the generation of power for the electrical loads in the tunnel, indicated with 40a, 40b, 40n.

The cogeneration unit preferably includes an electrical energy generator G of a generating set, actuated by a thermal engine, and a system for recovering the heat or heat exchanger H, adapted to provide thermal power to an infrastructure conveying towards outside users DH (for example teleheating or district heating), typically private users external to the tunnel.

In a simplified embodiment it is foreseen for the cogeneration unit to be replaced by a simple generating set, dedicated to producing electrical energy exclusively.

The generating set comprises a thermal engine preferably supplied with natural gas, in which case the station 20 is arranged in a region having a gas conveying infrastructure to which to connect, or an alternative fuel (for example gas oil), in which case it is necessary to store the fuel in an associated tank.

The public grid for supplying electrical energy is indicated with GRID, and on the connection from the station 20 to the grid GRID there is a first meter M1, for metering the electric energy exchanged between the station and the grid.

Each station 20 advantageously also includes, in a preferred embodiment, an electrical connection to one or more private user grids external to the tunnel, generally identified with PRIV, for example commercial or industrial sites near to the tunnel, such as service stations along the road portion where the tunnel is, or a distribution grid owned by the manager of the tunnel for supplying power for his own use. On the connections, respective second meters M2 are arranged to meter the electrical power exchanged between the station and the grid.

A private distribution grid PRIV owned by the manager of the tunnel, made between the stations 20, is placed for example under the road surface.

Respective switches SW_G, SW_GRID, SW_PRIV, SW_L are adapted to selectively connect the energy sources G and GRID to the supply line L for the loads of the tunnel and to the private infrastructure PRIV, through suitable *per se* known converting apparatuses, in the figure identified, for the sake of simplicity, by a simple bus bar B.

Operatively, it is necessary to distinguish between two operation conditions, a normal operation condition and an emergency operation condition, respectively, said emergency condition occurring after a malfunctioning of the public grid GRID.

The cogeneration system or the simple emergency generating set 30 of each distribution station 20 is constantly kept in operation and it acts as a primary power supply, so the station is operatively connected to both power sources.

In the case of normal operation, at every bus bar B of each distribution station 20 the two power sources are connected, respectively the local generator 30 as the primary source and the public grid GRID, i.e. the switches SW_G and SW_GRID, are normally closed, and the groups of loads installed in the tunnel and those external to it, i.e. the switches SW_PRIV and SW_L are normally closed.

The distribution station 20 receives power from the public grid, so the electrical loads of the tunnel are supplied by the energy produced by the generator G of the station and by the power purchased from the grid. The generator G, characterised by nominal power much greater than that required overall by the loads 40a-40n, is operated at constant generated power, near to the nominal power. The energy produced by the local generator is entered into the supply line L of the loads of the tunnel (SW_G closed, SW_GRID open) and, only in the case of greater need, foreseen following operation anomalies or maintenance operations on the system for producing energy, power is purchased from the public grid (SW_G closed, SW_GRID closed). In the case of less need, the electrical energy produced by the cogeneration system 30 of the station and in excess with respect to that required by the loads of the tunnel is released to one or more distribution grids external to the tunnel, amongst which the public grid itself and one or more private infrastructures PRIV for power distribution in a geographical area near to the tunnel (SW_G closed, SW_GRID closed, SW_PRIV closed).

In this configuration the two meters M1, M2 respectively measure the power exchanged with the public grid GRID and the power sold to private grids PRIV. The power exchanged with the public grid is the difference between the power used by the electric load of the tunnels and by the private grids and that produced by the source G.

Consequently, the public grid contributes to the power balance at the bus bars B and the energy expenditure of the manager of the tunnel is only calculated on such a balance, rather than on all the power consumed by the electrical loads of the tunnel. If such a balance is negative, the manager of the tunnel earns from selling electrical power as well as selling thermal power.

Irrespective of the operative state of the electrical energy sources, the thermal load connected to the infrastructure DH is always served, uninterruptedly, by the system for recovering the heat H of the cogeneration system 30.

In the case in which the power supply from the public grid is cut off, defined as the emergency operation condition, even if the public grid is not the primary power supply source, at every bus bar B of each distribution station 20 the single source G is connected, i.e. the switch SW_G is normally closed and the switch SW_GRID is normally open, and this source, within the limits of its possibilities, temporarily provides for supplying the priority electrical loads of the tunnel and possibly the amount needed by the private grid, i.e. the switches SW_PRIV and SW_L are normally closed.

The power produced by the local generator is entered into the supply line L of the loads of the tunnel (SW_G closed, SW_GRID open) and, in the case a lower amount is needed, the electrical energy produced by the cogeneration system 30 of the station and in excess with respect to that required by the loads of the tunnel, is released to one or more private infrastructures PRIV external to the tunnel for the distribution of energy in a close geographical area (SW_G closed, SW_PRIV closed).

In this configuration the meter M2 measures the power released to the respective associated private grid PRIV.

Advantageously, the thermal engine of the generating set 30 operates for most of its useful life and is not only a sunk cost (as is the case for gas oil engines of conventional emergency systems), but instead due to its continuous operation it will be possible to make profit by giving away the electrical power it produces.

The energy efficiency of the overall plant is also increased if such a plant is formed by a cogeneration system 30 rather than by a simple generating set, since in such a way there is the benefit of a more rational use of the produced energy, including also the fraction of thermal power conventionally dispersed into the environment, exploiting in an optimal manner the calories available in the fuel and reducing green house gas emissions. The thermal power can be released to the users through various fluids, like for example saturated or heated steam, hot water (which can also be used for refrigerating in absorption systems), diathermic oil, hot air, etc.

A further advantage is given by the fact that the use of uninterrupting power supplies are no longer necessary to back up a conventional "passive" power generating emergency system, so as to not interrupt the supply of electrical energy to the loads of the tunnel in the period of time between the interruption of the primary supply from the public grid and the steady state operation of the auxiliary system. Indeed, the cogeneration system according to the invention is arranged for always being "active" and able to immediately provide for the missing primary power supply.

This last characteristic causes also an intrinsic increase in the reliability of an emergency system as a whole, based upon the power supplying system according to the invention.

Of course, without affecting the principle of the invention, the embodiments and the details thereof can be widely varied with respect to what has been described and illustrated purely as a non limiting example, without for this reason departing from the scope of protection of the invention defined by the attached claims.

## Claims

1. A system for the power supply in tunnels, in particular road tunnels (T1, T2), comprising:
- at least a station (20) for distributing electrical power over at least a supply line (L) of electrical loads (40a, 40b, ..., 40n) installed in the tunnel (T), adapted to receive and convert electrical power supplied by a primary power supply, for supplying said loads (40a, 40b, ..., 40n) in a normal operating condition; and
- local power generating means (30), including an electrical generator (G) and a thermal engine for the operation thereof, associated with the distribution station (20) and arranged for supplying electrical power over said supply line (L) to the electrical loads (40a, 40b, ..., 40n),
**characterised in that** said power generating means (30) are permanently connected to said supply line (L) of the electrical loads (40a, 40b, ..., 40n) installed in the tunnel (T) and are adapted to supply electrical power in a continuous manner as a primary power supply (G);
**in that** it comprises means (SW_G, SW_GRID, SW_L, SW_PRIV) for controlling and regulating the distribution of electrical power, adapted to selectively connect said power supplies (G, GRID) and said loads (L), and specifically arranged to assume:
(i) a first configuration in a condition of normal operation of the system, wherein said power generating means (30) are connected to said supply line (L) as a primary power supply (G), and the public distribution grid (GRID) is connected to the supply line (L) in case of a power requirement at the loads (40a, 40b, ..., 40n) which is higher than the amount supplied by the power generating means (30), and
(ii) a second configuration in an emergency condition due to a break in the supply of electrical power from the public grid (GRID), wherein said power generating means (30) are connected to said supply line (L) in order to meet at least the power requirement of predetermined priority loads; and
**in that** said power generating means (30) are arranged to selectively supply at least an electrical power distribution grid (GRID; PRIV) external to the tunnel (T1, T2) in case of power requirement at the loads (40a, 40b, ..., 40n) installed in the tunnel (T1, T2) which is lower than the supplied amount.

2. A system according to Claim 1, wherein said power generating means (30) are arranged to selectively supply the public grid (GRID) with the electrical power exceeding the request by the loads (40a, 40b, ..., 40n) installed in the tunnel (T1, T2).

3. A system according to Claim 1 or 2, wherein said at least a station (20) for distributing electrical power comprises a medium- or low-voltage current bus bar, to which connecting arms to at least a supply line (L) of the loads (40a, 40b, ..., 40n) installed in the tunnel (T), to the public grid (GRID), and to the power generating means (30) are coupled through corresponding switching means (SW_G, SW_GRID, SW_L, SW_PRIV) for the connection or disconnection of the arm.

4. A system according to Claim 3, comprising metering means (M1, M2) arranged along the arms for connection to the public grid (GRID) and to the possible grids external to the tunnel (PRIV), for metering and charging the electrical power exchanged between the distribution station (20) and said grids (GRID, PRIV).

5. A system according to any of the preceding claims, wherein said power generating means (30) are arranged for selectively supplying at least a private infrastructure (PRIV) for the distribution of electrical power in a geographical area close to the tunnel (T1, T2), comprising electrical loads external to it.

6. A system according to any of the preceding claims, wherein said power generating means (30) include a heat exchanger (H), thus forming a cogeneration system for producing thermal power and conveying it to users (DH) external to the tunnel.

7. A system according to any of the preceding claims, wherein said thermal engine for operating the power generating means (30) is supplied with natural gas.
